Europäisches Patentamt

(19) European Patent Office

Office européen des brevets

(11) Publication number: **0 204 681 B1**

# EUROPEAN PATENT SPECIFICATION

(45) Date of publication of patent specification: **04.12.91**　　(51) Int. Cl.⁵: **B62D 25/16, B32B 27/32**

(21) Application number: **86870075.8**

(22) Date of filing: **28.05.86**

(54) Spray-suppression device.

(30) Priority: **29.05.85 US 738802**

(43) Date of publication of application:
**10.12.86 Bulletin 86/50**

(45) Publication of the grant of the patent:
**04.12.91 Bulletin 91/49**

(84) Designated Contracting States:
**AT BE CH DE FR GB IT LI LU NL SE**

(56) References cited:
**EP-A- 0 024 203**
**US-A- 4 391 870**

(73) Proprietor: **Monsanto Company**
**Patent Department 800 North Lindbergh Boulevard**
**St. Louis Missouri 63167-7020(US)**

(72) Inventor: **Mantarro, Joseph**
**2311 Inverness Drive**
**Pensacola Florida 32503(US)**
Inventor: **Wright, Robert Ted**
**1102 West Washington Street**
**Fayetteville Tennessee 37334(US)**

(74) Representative: **Ernst, Hubert et al**
**Monsanto Services International S.A. Avenue de Tervuren 270/272**
**B-1150 Brussels(BE)**

## Description

## BACKGROUND OF THE INVENTION

This invention relates to a device for reducing splash and spray thrown from the wheels of a vehicle moving on wet pavement. More particularly this invention relates to a laminated spray-suppression device of thermoplastic material having a three-dimensional molded surface.

As disclosed in U.S. patent 3,899,192, incorporated herein by reference, laminated spray-suppression devices for mounting to the rear of the wheels of a moving vehicle are known in the prior art. In that patent a grass-like layer is shown facing the rotating wheel and this has been proven especially effective in absorbing impinging spray from a wet roadway surface and allowing it to drain back onto the pavement.

While the splash and spray reducing device comprising such a three-dimensional laminate has found wide acceptance in the transportation industry, this device is not completely free of drawbacks. Materials normally used to form three-dimensional layer of this laminate, such as low density polyethylene LDPE, typically have poor low temperature mechanical properties, particularly ductility and impact. Cracking and resultant failure of these three-dimensional laminates due to poor low temperature ductility and impact resistance is often exacerbated by the geometry of the three-dimensional layer. This three-dimensional layer typically comprises a base portion in the form of a series of parallel rows of ribs and a plurality of blade-like protrusions extending from cup-like bases located between the parallel rows of ribs clustered at the intersections. The intersecting points at which the cup-like bases and ribs are joined provide areas of high stress localization which can result in the development of localized cracks which can propagate through the thickness of the three-dimensional layer. While it might be suspected that the utilization of a substrate or backing layer made from material which has good low temperature properties, such as high density polyethylene, would compensate for the deficiencies of the three-dimensional layer and provide the laminate with acceptable ductility and impact resistance. It has been found that the three-dimensional laminates exhibit significant embrittlement related failure when used at low temperature conditions. The low temperature embrittlement of the LDPE three-dimensional layer causes the failure of the entire laminate at temperatures at which the substrate itself remains ductile. The failure of the entire laminate is believed to be due to cracks which initiate in the LDPE three-dimensional layer, as described above, and which propagate through the entire thickness of the laminate. Propagation across the interface between the ductile backing layer and the brittle LDPE three-dimensional layer occurs where the bonding process produces strong association of the two layers.

As disclosed in U.S. patent 4,361,606, irradiation of the composite overcomes the problem and provides the device having a three-dimensional layer of LDPE with the desired balance of low temperature properties. However, irradiation has its deficiencies. More specifically, rather high dosages are necessary to alleviate cracking and this represents significant expense. Moreover, such dose levels provide an undesirable yellow tinge to the laminated product, e.g. to the backing which is often desired to be white. In addition catalysis residues, e.g. free radicals, may be developed in the various layers of polyethylene by the irradiation and react over long term periods to cause deterioration in the very properties intended to be enhanced. An alternative solution to the problem is disclosed in U.S. patent 4,391,870 where an intervening layer of a non-woven fabric core encapsulated on each side with an adhesive layer is located between the backing layer and the LDPE three-dimensional grass-like layer. Such encapsulated fabric core layer positioned between the backing layer and the LDPE three-dimensional grass-like layer serves to absorb and dissipate the energy of a crack as it is transmitted in low temperature service to such core layer from the embrittled LDPE layer thereby preventing the crack from propagating through to the backing layer. The use of such encapsulated fabric core layer however has its disadvantages. Specifically the use of such core layer requires additional material and manufacturing costs adversely effecting the economic viability of such spray-suppression devices.

## SUMMARY OF THE INVENTION

By this invention applicant has provided a laminated spray-suppression device which overcomes the aforementioned deficiencies of the prior art.

Accordingly, a principle object of this invention is to provide a laminated spray-suppression device having a decreased tendency to crack through its thickness at low temperatures which does not rely on irradiation or the use of an encapsulated fabric core layer for its effectiveness.

Another object of this invention is to provide such a device which achieves low temperature effectiveness, i.e. the use of a grass-like, three-dimensional molded layer of thermoplastic material which is

EP 0 204 681 B1

substantially free of areas of high stress localization.

These and other objects of the invention are accomplished by providing a laminated spray-suppression device comprising a backing layer of high density polyethylene having a thickness in the range of from 3 to 8 mm and a density in the range of from 0.94 to 0.96; said backing layer being fusion-bonded to a grass-like, three-dimensional molded layer having a plurality of elongated blades extending from cups on one side of a substantially uniform, ribless sheet, said molded layer comprising low density polyethylene or linear low density polyethylene having a density in the range of from 0.90 to 0.93, said sheet having a thickness of 0.1 to 2 mm, said blades having a length in the range of from 5 to 25 mm and a nominal width in the range of from 0.2 to 6 mm; wherein said molded layer is substantially free of residual stress so that the device is resistant to cracking at temperatures as low as 243°K. The device may further comprise a non-woven fabric core layer intermediate the substrate layer and grass-like, three-dimensional layer, wherein the fabric core layer is encapsulated on each side with an adhesive layer.

DETAILED DESCRIPTION OF PREFERRED EMBODIMENTS

The laminated spray-suppression device of this invention comprises a substrate layer and a three-dimensional grass-like layer which are selected to provide structural support and dimensional stability to allow for satisfactory spray-suppression performance over the expected range of ambient conditions, for instance at temperatures well below 0°C e.g. -30°C or lower and a temperatures higher than about 50°C.

The spray-suppression device of this invention is typically mounted as a conventional flap with the grass-like layer facing a vehicle wheel. In this arrangement the device is generally rigidly secured along its upper edge to a frame rearward of the vehicle wheel and the device is free to flex around the securement points. During vehicle travel the device is submitted to continual flexure conditions and primarily to wind pressure from the forward movement of the vehicle. In normal operation this wind pressure results in flexure of the device such that the grass-like layer is in tension whereas the substrate layer is in compression. Such flexure should be inhibited as much as possible to present an adequate amount of grass-like layer surface for absorbing impinging spray thrown by the wheel. Such flexure is inhibited by selecting a substrate layer having acceptable mechanical strength properties over most driving temperature conditions. To provide such properties the substrate layer can comprise high density polyolefin, e.g. high density polyethylene (HDPE) or high density polypropylene. Preferably the substrate layer comprises HDPE having a density in the range of from about 0.945 to about 0.960, and preferably in the range of from about 0.95 to 0.96. Such preferred HDPE will also have a melt index in the range of from about 0.1 to about 0.95, preferably in the range of from about 0.2 to 0.4. Control of flexure will depend on the thickness of the substrate layer which may range from about 2 to about 10 millimeters, depending on the other overall dimensions, i.e. length and width, of the spray-suppression device which will vary to accommodate the vehicle wheel size. For spray-suppression devices designed to be installed behind tandem wheels of a truck, thicknesses in the range of 3 to 8 millimeters have proved to be satisfactory.

The laminated spray-suppression device of this invention also comprises a grass-like, three-dimensional molded layer of thermoplastic material which provides a collection surface for impinging water thrown from the vehicle wheels. The grass-like, three-dimensional molded layer of the laminated spray-suppression device of this invention comprises a substantially flat sheet having a plurality of elongated blade-like elements extending therefrom. The elongated blade-like elements are preferably arranged in circular groups extending from the rim of a cup-like base which is integral with a substantially flat sheet. Desirably a substantially flat sheet provides the closed bottom of a cup-like base with the walls of the cup-like base extending from and integral with a flat sheet.

The grass-like, three-dimensional molded layer can comprise a variety of thermoplastic materials, but preferably will comprise polyolefins such as LDPE, LLDPE, HDPE or other polyethylenes or polypropylenes or blends thereof. More preferably the three-dimensional layer will comprise LDPE or LLDPE having a density in the range of from 0.90 to 0.93 as determined by ASTM D-792.

The substantially uniform sheet of the three-dimensional layer is often substantially imperforate and has a thickness in the range of from 0.1 to 2.0 mm. The blade-like elements extend preferably in a bud, e.g. of four (4) to twelve (12) blades, from a cup-like base which is integral with the uniform sheet. Blade-like elements can typically have a length in the range of from 5 to 25 mm and a nominal width (largest cross-sectional dimension) in the range of from 0.2 to 6 mm.

Such grass-like, three-dimensional molded layer can be advantageously produced by continuous injection molding apparatus and processes as disclosed in our European patent application 86870076.6 filed 28th May, 1986. Such grass-like, three-dimensional molded layer can be laminated to the substrate layer by processes disclosed by Rawlinson in U.S. Patent 4,329,196 or by processes disclosed in our European

3

patent application 86870074.1 filed 28th May, 1986.

The spray-suppression devices of this invention can be evaluated for low temperature durability by two tests: (1) a bend-to-break test and (2) an impact resistance test.

The bend-to-break test is performed on full size spray-suppression device which in its most common form comprises a 24 inch (61 cm) by 30 inch (76 cm) section of laminated product and representing the size of a conventional truck rain flap. The laminated product is conditioned for 24 hours at about -30°C (about -20°F) the conditioned laminated product is tightly clamped along a 24 inch (61 cm) side between a pair of jaws of a device which includes a confining track into which the 30 inch (76 cm) sides of the product are fitted which allows the product to be moved horizontally but not vertically. The jaws are then rotated angularly downward from the horizontal by means of a conventional drive mechanism through a maximum of 180 degrees at a rate of about 14 degrees per second. This places the upper face of the product (the three-dimensional grass-like surface) under tension and the lower face (the thick substrate) in compression. If cracking through the full thickness of the bending product occurs a clutch mechanism deactivates the drive mechanism and the traversed angle of rotation from the horizontal is read from an adjacent scale to provide the maximum angle through which the test specimen was capable of bending before breakage occurs at a temperature on the order of about -30°C (about -20°F).

The impact resistance test measures the energy required to crack test specimens under specified conditions of impact using a fixed weight, variable height falling tup. The technique used is commonly called the Bruceton Staircase Method and involves a combination of portions of ASTM D1709, part 36; D2444, part 26 and D3029, part 35. The procedure establishes the height which will cause 50 percent of the specimens tested to fail using a constant tup weight. According to the method the tup is repositioned after each impact to the next higher or lower increment depending upon the response from the previous specimen. Increments are $\frac{1}{2}$ foot (15.24 cms) units from $\frac{1}{2}$ to $7\frac{1}{2}$ feet (15.24 to 229 cms.) total. This will result ideally in half of the specimens passing and half failing. The average height at which this occurs when expressed as the product of the tup weight is termed the 50 percent pass/fail value. The impact resistance is the energy in foot pounds required to produce 50 percent failures and is determined for any given sample as the product of the mean drop height times the tup weight. Failure is signified by the presence of any crack or split created by the impact of the falling tup which can be seen by the naked eye. At least 20 specimens (5 by 5 inches (12.7 cms) are taken from a 24 inch (61 cms.) by 30 inch (76 cms.) laminated product section. Specimens are conditioned at -30°C. (about -20°F) for at least 16 hours prior to testing. The test procedure involves presetting the tup to the estimated 50 percent pass/fail height, placing the specimen over the sample holder and releasing the tup to allow it to free fall to impact. If impact does not result in catastrophic failure, the specimen is closely examined for evidence of any crack or split. If the specimen passes the tup is reset to the next higher increment whereas if it fails the tup is reset at the next lower increment. If the tup is at maximum or minimum height its weight is adjusted as necessary to reestablish a practical working range. If weight adjustment cannot be made the specimen is recorded as pass or fail.

Because the cup-like bases are integral with a substantially uniform sheet which forms the base of the cup-like base, the three-dimensional molded layer is exceptionally free of residual stress as compared to three-dimensional layers of the prior art, e.g. as made with a structure as disclosed by Doleman, et al. in U.S. Patent 3,590,109. In particular, when compared to the structure disclosed by Doleman, et al., the three-dimensional molded layer as used in the spray-suppression devices of this invention can be characterized as ribless. Such ribless three-dimensional molded layers as used in the spray-suppression devices of this invention provide exceptional durability, e.g. resistance to cracking, at temperatures as low as 243°K (-30°C). The use of such three-dimensional molded layer which is substantially free of residual stress provides spray-suppression devices having superior low temperature durability when compared to prior art devices. For instance a spray-suppression device according to this invention having a LDPE grass-like layer will bend up to 60 degrees without breaking at a temperature of -30°C. In some embodiments, e.g. when the grass-like layer comprises LLDPE, the spray-suppression device of this invention will bend up to 180 degrees without breaking at a temperature of -30°C. If greater low temperature durability is desired, e.g. because of use in an extremely low temperature environment or in severely high impact service, an intervening layer can be provided between the substrate and grass-like layer. As disclosed in U.S. patent 4,391,870, incorporated herein by reference, such intervening layer can comprise, e.g. a non-woven fabric core layer encapsulated on each side with an adhesive layer. A preferred intervening layer comprises a non-woven polyamide fabric core layer encapsulated with an adhesive layer comprising a copolymer of ethylene and vinyl-acetate.

The following examples are given to illustrate the spray-suppression device of this invention.

EXAMPLE 1

A laminated spray-suppression device was fabricated from grass-like, three-dimensional layer of LDPE and a substrate of HDPE. The grass-like, three-dimensional molded layer comprised a plurality of blade-like elements projecting in groups of eight (8) elements outwardly from the edge of cup-like bases on the surface of a substantially uniform sheet. The cup-like bases had an outer diameter of about 8 mm (0.32 inches) and were integral with the substantially uniform sheet which had a thickness of about 0.4 mm (0.016 inches). The cup-like bases extended about 3 mm (0.1 inches) above the surface of the sheet. Blade-like elements about 19 mm (0.75 inches) long extended generally perpendicular to the surface of the layer.

The grass-like, three-dimensional layer was fusion bonded to the HDPE substrate which had a thickness of 4.75 mm (0.187 inches). The laminate was cut into spray-suppression devices having planar dimensions of 61 cm by 76 cm (24 inches by 30 inches).

EXAMPLE 2

A spray-suppression device was made similar to that of Example 1 except that the grass-like three-dimensional layer comprised LLDPE.

EXAMPLE 3

Spray-suppression devices made according to Examples 1 and 2 were evaluated against spray-suppression devices of the prior art which comprised a grass-like, three-dimensional molded layer of LDPE having a structure as disclosed by Doleman, et al. in U.S. Patent 3,590,109 fusion bonded directly to a HDPE substrate. In these prior art devices blade-like elements extended from cup-like bases connected between parallel rib-like members.

## TABLE 1

### COMPARISON OF LOW TEMPERATURE DURABILITY OF
### SPRAY-SUPPRESSION DEVICES HAVING THREE-DIMENSIONAL
### LAYER FUSION BONDED TO HDPE SUBSTRATE

Low Temperature Durability Tests

| Three-Dimensional Layer | Bend-to Break | Impact Resistance |
|---|---|---|
| 1. Per Ex. 1: LDPE grass-like layer with buds of blade-like elements on a uniform sheet | 60 degrees | 80 joules (60 ft-lbs) |
| 2. Per Ex. 2: LLDPE grass-like with buds of blade-like elements on a uniform sheet | 180 degrees | 120 joules (90 ft-lbs) |
| 3. Prior Art: LDPE grass-like layer with buds of blade-like elements between parallel ribs | 35 degrees | 20 joules (15 ft-lbs) |

Table 1 shows the superior low temperature durability properties (bend-to-break and impact resistance) for spray-suppression devices according to this invention as compared to prior art spray-suppression devices.

The preceding description is set forth for purposes of illustration only and is not to be taken in a limited sense. Various modifications and alterations will be readily suggested to persons skilled in the art. It is intended, therefore, that the foregoing be considered as exemplary and that the scope of the invention be ascertained from the following claims.

## Claims

1. A laminated spray-suppression device comprising a backing layer of high density polyethylene having a thickness in the range of from 3 to 8 mm and a density in the range of from 0.94 to 0.96;
said backing layer being fusion bonded to a grass-like, three-dimensional molded layer having a plurality of elongated blades extending from cups on one side of a substantially uniform, ribless sheet, said molded layer comprising low density polyethylene or linear low density polyethylene having a density in the range of from 0.90 to 0.93, said sheet having a thickness in the range of from 0.1 to 2.0 mm, said blades having a length in the range of from 5 to 25 mm and a nominal width in the range of from 0.2 to 6 mm; wherein said molded layer is substantially free of residual stress so that the device is resistant to cracking at temperatures as low as 243° K.

2. The device of claim 1 further comprising a non-woven fabric core layer intermediate the substrate layer and grass-like, three-dimensional layer; wherein the fabric core layer is encapsulated on each side with an adhesive layer.

3. The device of claim 2 wherein the fabric core layer comprises a non-woven polyamide fabric.

4. The device of claim 3 wherein the adhesive layers comprise a copolymer of ethylene and vinyl acetate.

**Revendications**

1. Dispositif stratifié supprimant les pulvérisations comprenant une couche de renforcement constituée d'un polyéthylène haute densité ayant une épaisseur dans l'intervalle de 3 à 8 mm et une densité dans l'intervalle de 0,94 à 0,96; ladite couche de renforcement étant liée par fusion à une couche tridimensionnelle moulée à l'aspect de gazon ayant une pluralité de lamelles allongées partant de coupelles se trouvant sur un côté d'une feuille sans nervure sensiblement uni forme, ladite couche moulée étant constituée d'un polyéthylène basse densité ou d'un polyéthylène basse densité linéaire ayant une densité dans l'intervalle de 0,90 à 0,93, ladite feuille ayant une épaisseur dans l'intervalle de 0,1 à 2,0 mm, lesdites lamelles ayant une longueur dans l'intervalle de 5 à 25 mm et une largeur nominale dans l'intervalle de 0,2 à 6 mm; caractérisé par le fait que ladite couche moulée est sensiblement exempte de contraintes résiduelles de sorte que le dispositif est résistant à la fissuration à des températures pouvant descendre à 243° K.

2. Dispositif selon la revendication 1 comprenant en outre une couche d'âme de non tissé intermédiaire entre la couche de substrat et la couche tridimensionnelle à l'aspect de gazon; caractérisé par le fait que la couche d'âme de non tissé est encapsulée de chaque côté par une couche adhésive.

3. Dispositif selon la revendication 2, dans lequel la couche d'âme de non tissé comprend un non tissé de polyamide.

4. Dispositif selon la revendication 3, dans lequel les couches adhésives comprennent un copolymère d'éthylène et d'acétate de vinyle.

**Patentansprüche**

1. Laminierte Spritzer-unterdrückende Vorrichtung, welche eine Rückenschicht aus Polyäthylen hoher Dichte mit einer Dicke im Bereich von 3 bis 8 mm und einer Dichte im Bereich von 0,94 bis 0,96 aufweist, wobei diese Rückenschicht mit einer in einer Form dreidimensional geformten grasartigen Schicht schmelzverbunden ist, welche eine Vielzahl von länglichen Blättern aufweist, welche von Bechern an einer Seite einer im wesentlichen gleichförmigen rippenlosen Platte ausgehen, wobei diese in einer Form geformte Schicht Polyäthylen niedriger Dichte oder lineares Polyäthylen niedriger Dichte mit einer Dichte im Bereich von 0,90 bis 0,93 enthält, diese Platte eine im Bereich von 0,1 bis 2 mm liegende Dicke hat, und die Blätter eine Länge im Bereich von 5 bis 25 mm und eine Nennbreite im Bereich von 0,2 bis 6 mm haben, wobei die in einer Form geformte Schicht im wesentlichen frei von Eigenspannungen ist, so daß die Vorrichtung bei tiefen Temperaturen, wie 243° K, gegen Rißbildung widerstandsfähig ist.

2. Vorrichtung nach Anspruch 1, dadurch gekennzeichnet, daß zwischen der Trägerschicht und der grasartigen dreidimensionalen Schicht eine Vlies-Kernschicht vorgesehen ist, wobei die textile Kernschicht auf jeder Seite mit einer Kleberschicht eingekapselt ist.

3. Vorrichtung nach Anspruch 2, dadurch gekennzeichnet, daß die textile Kernschicht ein Polyamidvlies enthält.

4. Vorrichtung nach Anspruch 3, dadurch gekennzeichnet, daß die Kleberschichten ein Kopolymer aus Äthylen und Vinylazetat enthalten.

7